# EUROPÄISCHE PATENTSCHRIFT

(11) **EP 0 569 111 B1**
(45) Veröffentlichungstag und Bekanntmachung des Hinweises auf die Patenterteilung: **09.08.1995**
(21) Anmeldenummer: 93250129.9
(22) Anmeldetag: 07.05.1993
(51) Int. Cl.: B60B 39/00

(54) **Gleitschutzvorrichtung für Kraftfahrzeuge**
Anti-skid device for vehicles
Dispositif anti-dérapant pour véhicules

(30) Priorität: 08.05.1992 DE 4215371
(43) Veröffentlichungstag der Anmeldung: 10.11.1993
(73) Patentinhaber: RUD-Kettenfabrik Rieger & Dietz GmbH u. Co., D-73406 Aalen (DE)
(72) Erfinder: Hofmann, Peter Werner, W-7080 Aalen-Unterkochen (DE)
(74) Vertreter: Böning, Manfred, Dr.-Ing.

(56) Entgegenhaltungen:
- EP-A- 0 162 823
- EP-A- 0 241 411
- DE-C- 3 645 126

## Beschreibung

Die Erfindung betrifft eine Gleitschutzvorrichtung für Kraftfahrzeuge mit mehreren, an einem durch den Fahrzeugreifen in eine Drehbewegung versetzbaren Halter befestigten Kettensträngen, deren dem Kalter abgewandte Enden bei in der Betriebsstellung umlaufendem Halter unter Fliehkrafteinwirkung vom Halter weg in den Bereich der Bodenberührungsfläche des sich drehenden Fahrzeugreifens geschleudert werden, mit einem an einem am Fahrzeug befestigten, einen Hohlraum aufweisenden Tragteil angeordneten Schwenkaggregat für einen den Halter tragenden Auslegerarm und mit Mitteln zum Einleiten gegenläufiger Schwenkbewegungen in das Schwenkaggregat, durch die der Auslegerarm aus seiner Ruhestellung in seine Betriebsstellung und zurück bewegbar ist.

Eine Gleitschutzvorrichtung der vorstehenden Art ist aus der DE-C-36 45 126 bekannt. Bei der bekannten Vorrichtung wird der Tragteil von einem Tragrohr gebildet, das zu Positionierungszwecken hin- und herverschiebbar sowie um seine Längsachse schwenkbar ist. An einem Ende des Tragteiles trägt dieser ein durch eine flexible Welle antreibbares, als Schneckengetriebe ausgebildetes Schwenkaggregat für den den Halter tragenden Auslegerarm. Das Schneckengetriebe ermöglicht zwar eine sehr genaue Positionierung der Gleitschutzvorrichtung, sein Herstellungsaufwand ist indes vergleichsweise hoch. Insbesondere bei Fahrzeugen mit Druckluftbremssystemen werden daher gern einfachere, durch Druckluft betätigbare Schwenkaggregate eingesetzt, wie sie beispielsweise aus der EP-A-0 162 823 bekannt sind. Bei der in der zuletzt genannten Druckschrift offenbarten Gleitschutzvorrichtung besteht das Schwenkaggregat im wesentlichen aus zwei auf der Schwenkachse des Auslegerarmes exzentrisch angeordneten Scheiben, in die durch zwei Zugseile von Bowdenzügen gegenläufige Bewegungen einleitbar sind, wobei zur Betätigung des den Kalter aus seiner Ruhestellung in seine Betriebsstellung überführenden Zugseiles eine Drucklufteinheit und zum Zurückführen des Halters aus seiner Betriebsstellung in die Ruhestellung eine Druckluftfeder dienen, welch letztere zusammen mit der Drucklufteinheit an einer vom Schwenkaggregat relativ weit entfernten Stelle des Fahrzeuges angeordnet ist und folglich den Einsatz langer Bowdenzüge sowohl für die Verbindung der Drucklufteinheit als auch für die Verbindung der Druckluftfeder mit dem Schwenkaggregat erfordert.

Der Erfindung liegt die Aufgabe zugrunde, eine Gleitschutzvorrichtung der in Betracht gezogenen Gattung zu vereinfachen und möglichst kompakt zu gestalten. Diese Aufgabe wird erfindungsgemäß dadurch gelöst, daß zum Einleiten der den Auslegerarm aus der Ruhestellung in die Betriebsstellung überführenden Schwenkbewegung in das Schwenkaggregat ein vom Fahrzeugführer mittelbar oder unmittelbar betätigbarer erster Zugstrang dient, dessen eines Ende an einer mit der Schwenkachse des Schwenkaggregates verbundenen ersten Antriebsscheibe befestigt ist und diese auf mindestens einem Teil ihres Umfanges umschließt, daß zum Einleiten der den Auslegerarm aus der Betriebsstellung in die Ruhestellung überführenden Schwenkbewegung in das Schwenkaggregat ein unter der Einwirkung einer Rückstellfeder stehender zweiter Zugstrang dient, dessen eines Ende an einer mit der Schwenkachse des Schwenkaggregates verbundenen zweiten Antriebsscheibe befestigt ist und diese auf mindestens einem Teil ihres Umfanges umschließt, und daß die Rückstellfeder im Hohlraum des Tragteiles für das Schwenkaggregat angeordnet ist.

Die erfindungsgemäße Gleitschutzvorrichtung bietet einerseits die gleiche vorteilhafte Positionierungsmöglichkeit des Halters wie die gattungsgleiche Gleitschutzvorrichtung und zeichnet sich andererseits durch einen noch einfacheren und kompakteren Aufbau als die zweite beschriebene bekannte Gleitschutzvorrichtung aus, indem der Tragteil als Gehäuse für die geschützte Unterbringung der Rückstellfeder genutzt wird. Hinzu kommt, daß durch die Anordnung der Rückstellfeder in unmittelbarer Nähe des Schwenkaggregates einer der benötigten Zugstränge äußerst kurz sein kann.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform. Es zeigen:

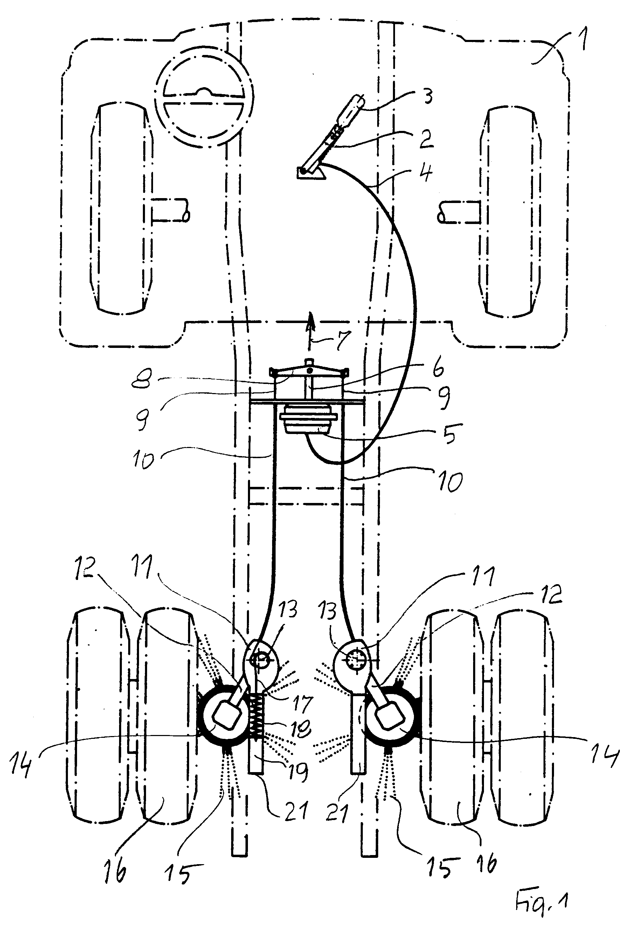

Fig. 1 die Draufsicht auf zwei Gleitschutzvorrichtungen, deren als Reibräder ausgebildete Halter für Kettenstränge sich in der Betriebsstellung befinden,
Fig. 2 in vergrößertem Maßstab und teilweise im Schnitt die Seitenansicht einer der in Fig. 1 dargestellten Gleitschutzvorrichtungen,
Fig. 3 die Lage des Halters und des ihn tragenden Auslegerarmes in der Ruhestellung der Gleitschutzvorrichtung und
Fig. 4 die Lage des Halters und des ihn tragenden Auslegerarmes in der Betriebsstellung der Gleitschutzvorrichtung.

Im Führerhaus 1 eines Kraftfahrzeuges befindet sich ein Hebel 2 einer mit Druckgaspatronen 3 handelsüblicher Art bestückbaren Druckgasquelle. Bei Betätigen des Hebels 2 wird die Druckgaspatrone 3 geöffnet und über die Druckgasleitung 4 kann Druckgas in einen Druckgaszylinder 5 mit einer nicht dargestellten Membran strömen, die eine Kolbenstange 6 in Richtung des Pfeiles 7 bewegt. Mit der Kolbenstange 6 ist eine Traverse 8 verbunden, an der die Enden zweier von Seilen gebildeter Zugstränge 9 von Bowdenzügen 10 befestigt sind, von denen jeweils einer zu einem Schwenkaggregat 11 für den Auslegerarm 12 einer der beiden Gleitschutzvorrichtungen führt.

Am Ende eines jeden um eine Achse 13 schwenkbaren Auslegerarmes 12 ist jeweils ein drehbarer Halter 14 für eine Vielzahl von Kettensträngen 15 befestigt. Durch die Zugstränge 9 werden die als Reibräder ausgebildeten Halter 14 gegen die Flanken der ihnen zugeordneten Fahrzeugreifen 16 gepreßt, solange der Druckgaszylinder 5 mit Druckgas beaufschlagt ist. Bei Druckentlastung erfolgt die Rückführung der Kalter aus ihrer Betriebsstellung in eine Ruhestellung. Dies geschieht dadurch, daß über einen ebenfalls als Seil ausgebildeten Zugstrang 17 in die Schwenkachse 13 des Auslegerarmes 12 eine gegenläufige Bewegung, d.h. im dargestellten Fall eine Bewegung gegen den Uhrzeigersinn eingeleitet wird. Der Zugstrang 17 wird dabei durch eine Rückstellfeder angetrieben, die über ein am Ende des Zugstranges 17 befestigtes Widerlager 19 auf den Zugstrang einwirkt. Die Rückstellfeder 18 ist geschützt in einem Hohlraum 20 eines Tragteiles 21 untergebracht.

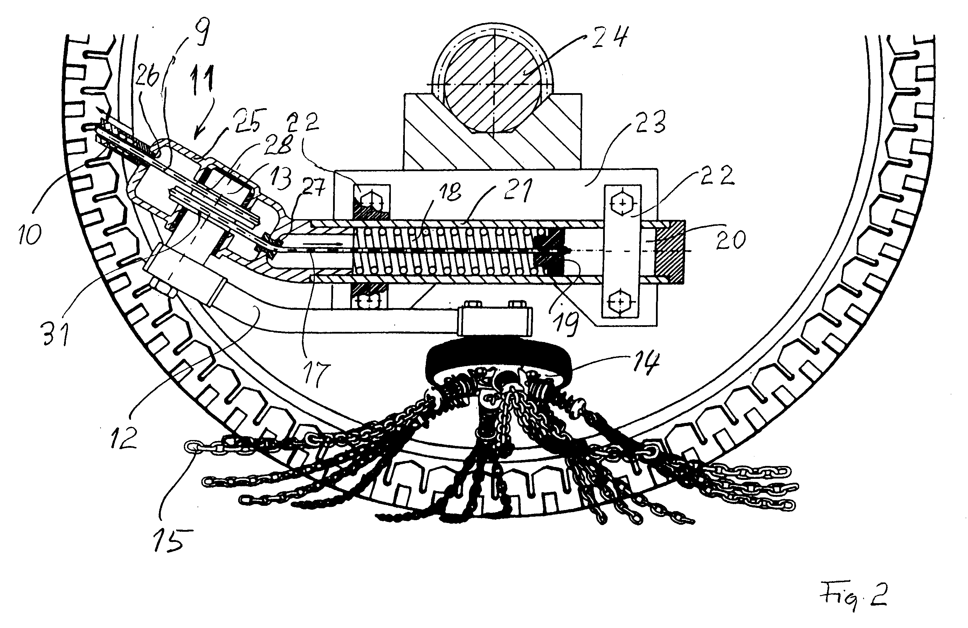

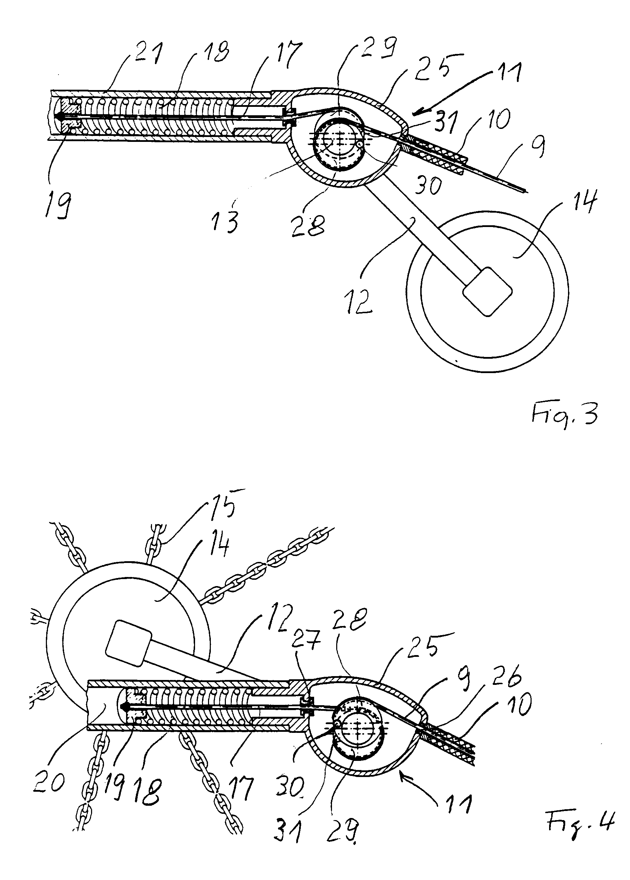

Einzelheiten des Aufbaues des Schwenkaggregates 11 und der platzsparenden Unterbringung der Rückstellfeder 18 zeigen die Figuren 2 bis 4.

Aus Figur 2 ist erkennbar, daß der von einem Rohr gebildete Tragteil 21 mit Hilfe von Rohrschellen 22 über eine Halteplatte 23 mit der Radachse 24 des Fahrzeuges verbunden ist. Durch die Ausbildung des Tragteiles 21 als Rohr läßt sich die Lage der Gleitschutzvorrichtung zum Fahrzeugreifen 16 genau und bequem einstellen. Mit dem Tragteil 21 ist unverlierbar das Gehäuse 25 des Schwenkaggregates verbunden, in dem die Schwenkachse 13 des Auslegerarmes 12 für den Halter 14 gelagert ist.

Die Zugstränge 9 und 17 werden durch sich gegenüberliegende Öffnungen 26,27 in das Gehäuse 25 des Schwenkaggregates 11 eingeführt. Beide Zugstränge 9 und 17 umschließen mindestens partiell zwei übereinander angeordnete, drehfest mit der Schwenkachse 13 verbundene Antriebsscheiben 28,29, wobei das Ende des Zugstranges 9 bei 30 mit der Antriebsscheibe 28 und das Ende des Zugstranges 17 bei 31 mit der Antriebsscheibe 29 verbunden ist. Die Scheitel der von Exzentern gebildeten oder exzentrisch angeordneten Antriebsscheiben 28 und 29 sind derart um etwa 180° zueinander versetzt angeordnet, daß der Zugstrang 9 in der Betriebsstellung und der Zugstrang 17 in der Ruhestellung an einem möglichst großen Hebelarm auf die Schwenkachse 13 einwirken.

## Patentansprüche

1. Gleitschutzvorrichtung für Kraftfahrzeuge mit mehreren, an einem durch den Fahrzeugreifen in eine Drehbewegung versetzbaren Halter (14) befestigten Kettensträngen (15), deren dem Halter abgewandte Enden bei in der Betriebsstellung umlaufendem Halter (14) unter Fliehkrafteinwirkung vom Halter (14) weg in den Bereich der Bodenberührungsfläche des sich drehenden Fahrzeugreifens (16) geschleudert werden, mit einem an einem am Fahrzeug befestigten, einen Hohlraum (20) aufweisenden Tragteil (21) angeordneten Schwenkaggregat (11) für einen den Halter (14) tragenden Auslegerarm (12) und mit Mitteln zum Einleiten gegenläufiger Schwenkbewegungen in das Schwenkaggregat (11), durch die der Auslegerarm (12) aus einer Ruhestellung in seine Betriebsstellung und zurück bewegbar ist, **dadurch gekennzeichnet**, daß zum Einleiten der den Auslegerarm (12) aus der Ruhestellung in die Betriebsstellung überführenden Schwenkbewegung in das Schwenkaggregat (11) ein vom Fahrzeugführer mittelbar oder unmittelbar betätigbarer erster Zugstrang (9) dient, dessen eines Ende an einer mit der Schwenkachse (13) des Schwenkaggregates (11) verbundenen ersten Antriebsscheibe (28) befestigt ist und diese auf mindestens einen Teil ihres Umfanges umschließt, daß zum Einleiten der den Auslegerarm (12) aus der Betriebsstellung in die Ruhestellung über führenden Schwenkbewegung in das Schwenkaggregat (11) ein unter der Einwirkung einer Rückstellfeder (18) stehender zweiter Zugstrang (17) dient, dessen eines Ende an einer mit der Schwenkachse (13) des Schwenkaggregates (11) verbundenen zweiten Antriebsscheibe (29) befestigt ist und diese auf mindestens einem Teil ihres Umfanges umschließt, und daß die Rückstellfeder (18) im Hohlraum (20) des Tragteiles (21) für das Schwenkaggregat (11) angeordnet ist.

2. Gleitschutzvorrichtung nach Anspruch 1, **dadurch gekennzeichnet**, daß das Schwenkaggregat (11) ein fest mit dem Tragteil (21) verbundenes Gehäuse (25) aufweist, das an sich gegenüberliegenden Seiten mit Eintrittsöffnungen (26,27) für die beiden Zugstränge (9,17) versehen ist.

3. Gleitschutzvorrichtung nach Anspruch 1 oder 2, **dadurc**h **gekennzeichnet**, daß die Rückstellfeder (18) als einen Teil des zweiten Zugstranges (17) umschließende Druckfeder ausgebildet ist, deren Kraft durch ein am der zweiten Antriebsscheibe (29) abgewandten Ende des zweiten Zugstranges (17) angeordnetes Widerlager (19) auf diesen übertragen wird.

4. Gleitschutzvorrichtung nach einem oder mehreren der Ansprüche 1 bis 3, **dadurch gekennzeichnet**, daß die Antriebsscheiben (28,29) als Exzenter ausgebildet sind, deren Scheitel so angeordnet sind, daß der erste Zugstrang (9) in der Betriebsstellung und der zweite Zugstrang (17) in der Ruhestellung über einen längeren Hebelarm auf die Schwenkachse (13) des Schwenkaggregates (11) einwirkt als in den übrigen Positionen.

5. Gleitschutzvorrichtung nach Anspruch 4, **dadurch gekennzeichnet**, daß die Scheitel der exzentrisch angeordneten Antriebsscheiben (28,29) bei auf der gleichen Seite der Schwenkachse (13) in das Gehäuse (25) des Schwenkaggregates (11) eingeführten Zugsträngen (9,17) im wesentlichen um 180° zueinander versetzt sind.

6. Gleitschutzvorrichtung nach einem oder mehreren der Ansprüche 1 bis 5, **dadurch gekennzeichnet**, daß der erste Zugstrang (9) als Teil eines Bowdenzuges (10) ausgebildet ist.

7. Gleitschutzvorrichtung nach einem oder mehreren der Ansprüche 1 bis 6, **dadurch gekennzeichnet**, daß der Tragteil (21) von einem Rohr gebildet wird, an dessen Ende das Schwenkaggregat (11) angeordnet ist.

## Claims

1. Anti-skid device for motor vehicles, with a plurality of chain lines (15) which are fastened to a holder (14) capable of being set in rotational movement by the vehicle tire and of which the ends facing away from the holder, with the holder (14) rotating in the operating position, are thrown away from the holder (14) under the effect of centrifugal force into the region of the ground contact surface of the rotating vehicle tire (16), with a pivoting unit (11) which is arranged on a carrying part (21) fastened to the vehicle and having a cavity (20) and which is intended for a jib arm (12) carrying the holder (14), and with means for introducing oppositely directed pivoting movements into the pivoting unit (11), by which means the jib arm (12) can be moved out of a position of rest into its operating position and back, characterized in that there serves for introducing the pivoting movement, transferring the jib arm (12) out of the position of rest into the operating position, into the pivoting unit (11) a first pull line (9) which can be actuated indirectly or directly by the vehicle driver and one end of which is fastened to a first driving pulley (28) connected to the pivot axle (13) of the pivoting unit (11) and surrounds the said first driving pulley (28) over at least part of its circumference, in that there serves for introducing the pivoting movement, transferring the jib arm (12) out of the operating position into the position of rest, into the pivoting unit (11) a second pull line (17) which is under the effect of a return spring (18) and one end of which is fastened to a second driving pulley (29) connected to the pivot axle (13) of the pivoting unit (11) and surrounds the said second driving pulley (29) over at least part of its circumference, and in that the return spring (18) is arranged in the cavity (20) of the carrying part (21) for the pivoting unit (11).

2. Anti-skid device according to claim 1, characterized in that the pivoting unit (11) has a housing (25) connected fixedly to the carrying part (21) and which is provided on mutually opposite sides with entry orifices (26, 27) for the two pull lines (9, 17).

3. Anti-skid device according to claim 1 or 2, characterized in that the return spring (18) is designed as a compression spring which surrounds part of the second pull line (17) and the force of which is transmitted to the second pull line (17) by means of an abutment (19) arranged at the end of the second pull line (17) facing away from the second driving pulley (29).

4. Anti-skid device according to one or more of claims 1 to 3, characterized in that the driving pulleys (28, 29) are designed as eccentrics, the vertices of which are arranged in such a way that in the operating position the first pull line (9) and in the position of rest the second pull line (17) acts on the pivot axle (13) of the pivoting unit (11) via a longer lever arm than in the remaining positions.

5. Anti-skid device according to claim 4, characterized in that the vertices of the eccentrically arranged driving pulleys (28, 29) are offset relative to one another essentially at 180° when the pull lines (9, 17) are introduced into the housing (25) of the pivoting unit (11) on the same side of the pivot axle (13).

6. Anti-skid device according to one or more of claims 1 to 5, characterized in that the first pull line (9) is designed as part of a Bowden pull (10).

7. Anti-skid device according to one or more of claims 1 to 6, characterized in that the carrying part (21) is formed by a tube, on the end of which the pivoting unit (11) is arranged.

## Revendications

1. Dispositif anti-dérapant pour véhicules, comprenant plusieurs tronçons de chaînes (15) fixés à un support (14) susceptible d'être déplacé en rotation par un pneu du véhicule, et dont les extrémités opposées au support (14) sont lancées du support (14) lorsqu'il est en rotation, en position de marche, sous l'influence de la force centrifuge, dans la région de la zone de contact au sol du pneu tournant (16) du véhicule, comprenant un entraînement en pivotement (11) disposé sur une pièce porteuse (21) fixée au véhicule et présentant un creux (20), pour un bras (12) portant le support (14), et comprenant des moyens pour communiquer à l'entraînement en pivotement (11) des mouvements de pivotement opposés par lesquels le bras (12) est susceptible d'être déplacé de la position de repos à la position de marche et inversement, caractérisé en ce qu'un premier tronçon de traction (9) susceptible d'être actionné directement ou indirectement par le conducteur du véhicule, et dont une extrémité est fixée à un premier disque d'entraînement (28) relié à l'axe de pivotement (13) de l'entraînement en pivotement (11), sert à communiquer à l'entraînement en pivotement (11) un mouvement de pivotement amenant le bras (12) de la position de repos à la position de marche, et entoure ce disque au moins sur une partie de son pourtour, en ce qu'un deuxième tronçon de traction (17), dont l'extrémité est fixée à un deuxième disque d'entraînement (29) relié à l'axe de pivotement (13) de l'entraînement en pivotement (11), sert, sous l'action d'un ressort de rappel (18), à communiquer à l'entraînement en pivotement (11) un mouvement de pivotement amenant le bras (12) de la position de marche à la position de repos, et entoure ce disque au moins sur une partie de son pourtour, et en ce que le ressort de rappel (18) est disposé dans le creux (20) de la pièce porteuse (21) pour l'entraînement en pivotement (11).

2. Dispositif anti-dérapant selon la revendication 1, caractérisé en ce que l'entraînement en pivotement (11) comprend un boîtier (25) solidaire de la pièce porteuse (21), ledit boîtier (25) étant pourvu, sur des côtés opposés, d'ouvertures d'entrée (26, 27) pour les deux tronçons de traction (9, 17).

3. Dispositif anti-dérapant selon la revendication 1 ou 2, caractérisé en ce que le ressort de rappel (18) est formé comme un ressort de compression entourant une partie du deuxième tronçon de traction (17) et dont la force est transmise à celui-ci par une butée (19) disposée à l'extrémité du deuxième tronçon de traction (17) opposée au deuxième disque d'entraînement (29).

4. Dispositif anti-dérapant selon une ou plusieurs des revendications 1 à 3, caractérisé en ce que les disques d'entraînement (28, 29) sont formés comme des excentriques dont les sommets sont disposés de façon que le premier tronçon de traction (9), dans la position de marche, et le deuxième tronçon de traction (7), dans la position de repos, agissent sur l'axe de pivotement (13) de l'entraînement en pivotement (11) par un bras de levier plus long que dans les autres positions.

5. Dispositif anti-dérapant selon la revendication 4, caractérisé en ce que les sommets des disques d'entraînement (28, 29) disposés excentriquement, sont décalés l'un par rapport à l'autre d'environ 180° dans le cas de tronçons d'entraînement (9, 17) introduits du même côté de l'axe de pivotement (13) dans le boîtier (24) de l'entraînement en pivotement (11).

6. Dispositif anti-dérapant selon une ou plusieurs des revendications 1 à 5, caractérisé en ce que le premier tronçon de traction (9) est formé comme une partie d'un câble Bowden (10).

7. Dispositif anti-dérapant selon une ou plusieurs des revendications 1 à 6, caractérisé en ce que la pièce porteuse (21) est formée d'un tuyau à l'extrémité duquel est disposé l'entraînement en pivotement (11).
